(19) Europäisches Patentamt
European Patent Office
Office européen des brevets

(11) **EP 2 305 740 B1**

(12) **EUROPÄISCHE PATENTSCHRIFT**

(45) Veröffentlichungstag und Bekanntmachung des Hinweises auf die Patenterteilung:
**08.06.2011 Patentblatt 2011/23**

(51) Int Cl.:
***C08J 3/14*** *(2006.01)*

(21) Anmeldenummer: **09012418.1**

(22) Anmeldetag: **30.09.2009**

(54) **Verfahren zur Herstellung von Polymerpartikeln**

Method for manufacturing polymer particles

Procédé destiné à la fabrication de particules de polymère

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**06.04.2011 Patentblatt 2011/14**

(73) Patentinhaber: **EMS-PATENT AG**
**7013 Domat/Ems (CH)**

(72) Erfinder:
- **Carle, Oliver**
  **7000 Chur (CH)**
- **Liedloff, Hanns-Jörg**
  **7013 Domat/Ems (CH)**
- **Kägi, Werner**
  **7013 Domat/Ems (CH)**
- **Mark, Raffael**
  **7453 Tinizong (CH)**
- **Dajcar, Jan**
  **8590 Romanshorn (CH)**
- **Müller, Ralph Michael**
  **7000 Chur (CH)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A2- 0 297 363     WO-A2-02/057319**
**US-A- 3 919 363**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Polymerpartikeln aus einer Polymerlösung, bei dem die Polymerlösung in einem Vereinzelungsverfahren vertropft oder versprüht wird und die Tropfen in ein bewegtes Fällbad eingetropft werden.

Die Tropfenentstehung aus der Zerteilung von Flüssigkeiten war bereits Gegenstand zahlreicher experimenteller und theoretischer Untersuchungen. So wurde für die Vertropfung das Anwachsen von Instabilitäten auf der Oberfläche eines zylindrischen Freistrahls beschrieben. Die Kräfte, die zur Zerteilung des Freistrahls führen, werden durch die konvexe und konkave Krümmung der Oberfläche aufgrund der Oberflächenwellen erzeugt.

Im konkaven Abschnitt des Flüssigkeitsstrahls führt die Beschleunigung der Flüssigkeit aufgrund der Massenerhaltung zu einer Absenkung des inneren Druckes (Energiegleichung nach Bernoulli). Anderseits führt die Krümmung der Oberfläche zu einem zusätzlichen positiven Druckterm. Aus der Kräftebilanz an der Oberfläche ergibt sich dann, ob der Strahl seine ursprüngliche Form wiedererhalten kann oder im Bereich der konkaven Krümmung einreißt. Plateau (J. Plateau, "Statique Expérimentale et Théoretique des Liquides Soumis aux Seules Forces Moléculaires", zitiert von Lord Rayleigh, Theory of Sound, Vol. 2, Dover Publications, New York, 1945) stellte fest, dass für Wellenlängen, die größer als die Umfangslänge des Flüssigkeitsstrahls sind, die Instabilität bis zum Aufbruch angefacht wird. Für kleinere Wellenlängen werden die Störungen gedämpft. In einer späteren Arbeit von Rayleigh (Lord Rayleigh J.W.S., "On the instability of jets", Proc. Math. Soc. Lond., Vol. 10, pp. 4-13, 1978) wurde eine sinusförmige Oberflächenstörung für den Strahl angenommen, die exponentiell mit der Zeit ansteigt:

$$a = a_0 e^{qt} \tag{1}$$

mit dem Verstärkungsfaktor q, der von der Wellenlänge der Störung, dem Durchmesser des Strahls und der Dichte abhängt. Unter Vernachlässigung der Viskosität ergibt sich die Wellenlänge der Störung mit maximaler Wachstumsrate zu

$$\lambda_{opt} = \sqrt{2}\pi d \tag{2}$$

und für viskose Flüssigkeiten nach Lefebvre (A. Lefebvre, "Atomization and sprays", Hemisphere Publishing Corporation, New York, 1989)

$$\lambda_{opt} = \sqrt{2}\pi d \left(1 + \frac{3\eta_l}{\sqrt{\rho_l \sigma_l d_{Jet}}}\right)^{1/2} \tag{3}$$

Eine tangentiale relative Gasgeschwindigkeit führt nach Weber (C. Weber, "Disintegration of liquid jets", Z. Angew. Math. Mech., Vol. 11, pp 136 - 159, 1931) zu einer Verkleinerung dieser optimalen Wellenlängen. Der Strahlaufbruch wird dann durch Oszillationen dominiert, die von der Scherspannung aufgezwungenen werden. Für noch höhere Relativgeschwindigkeiten ergibt sich eine sinusförmige Wellenform hoher Amplitude, die schließlich zum Aufbruch führt.

Die Zerteilung flüssiger flacher oder rotationssymmetrischer Filme bei der Versprühung erfolgt durch die Bildung von Wellenfronten an der Phasengrenzfläche Flüssigkeit - Gas. Aus der lokalen Krümmung der Oberfläche ergibt sich der innere Differenzdruck mit der Oberflächenspannung $\sigma_1$ zu

$$p_l - p_U = -\sigma_l \frac{d^2 h}{d x^2}$$

$$(4).$$

wobei h die lokale Auslenkung der Oberfläche aus der Ruheposition definiert. Diesem zusätzlichen inneren Druckanteil steht ein lokaler Anstieg des statischen Druckes in der Gasphase entgegen (Energiesatz nach Bernoulli). Nimmt man eine sinusförmige Störung der Oberfläche an, ergibt sich, ähnlich den Stabilitätskriterien für den Strahl, ein exponentielles Anfachen dieser Störung in Abhängigkeit der Wellenlänge λ, der Filmdicke sowie der Dichte, der Oberflächenspannung und der Filmgeschwindigkeit.

Aus dem Stand der Technik sind bereits Verfahren zur Herstellung von Polymerpartikel bzw. -granulaten bekannt, wobei diese Verfahren zumeist aus dem schmelzflüssigen Zustand durchgeführt werden. Für die normalerweise hohen Schmelzeviskositäten ist eine Granulierung üblich. Im Falle von niedrig viskosen Polymerschmelzen bzw. niederen Molekulargewichten können Partikel mittels Tropfenerzeugungsverfahren hergestellt werden, wobei die Verfestigung allein durch thermische Abkühlung erfolgt, z.B. in einem Fallturm (mit kühlem Gas) oder durch Fall in ein Wasserbad, wobei das Wasser lediglich als Kühlmittel dient.

So betrifft die EP 0 735 940 B1 ein Verfahren zur Herstellung von aus Kunststoff bestehenden Partikeln, bei dem der Kunststoff schmelzflüssig durch Schwingungsanregung einer Düseneinrichtung vertropft und die gebildeten Tropfen in eine Kühlflüssigkeit eingetragen werden.

Die DE 10 2004 059 069 A1 betrifft ferner eine Vertropfungsanlage zur Herstellung von Polymerpartikeln, die einen Reaktor zur Polymerschmelzenherstellung umfasst, bei dem die (niedrig viskose) Polymerschmelze über mehrere Tropftürme mit Tropfdüsen vertropft wird. Die eigentliche Vertropfung erfolgt ebenso aus schmelzflüssigem Zustand.

Die DE 102 04 954 A1 betrifft ebenso eine Vorrichtung zur Herstellung kugelförmiger Partikel aus einer Schmelze aus Kunststoff sowie ein Verfahren, bei dem ebenso aus einer niederviskosen Kunststoffschmelze durch Vertropfen Pellets gebildet werden.

Auch die US 2003/0020213 A1 beschreibt ein Verfahren zur Herstellung von kugelförmigen Partikeln aus schmelzflüssigem Zustand eines aufgeschmolzenen Materials.

Weiterhin ist aus der US 3,919,363 A die Herstellung eines Polymeren durch Umfällen bekannt.

Nachteilig bei den zuvor genannten

Vertropfungsverfahren des Standes der Technik für Schmelzen sind folgende Aspekte:

- Verstopfungen der bei der Vertropfung eingesetzten Düsen, so dass die entsprechenden Vertropfungsanlagen häufig zu warten sind, und der daraus folgenden Begrenzung der Standzeit derartiger Anlagen
- Bildung von Düsenperlen, Fäden oder Gespinsten (Fadenbildung falls die Viskosität bzw. das Molekulargewicht nicht niedrig genug ist)
- Ausgasen und ggf. Zündung von thermischen Zersetzungsprodukten
- Sublimation und Resublimation von Oligomeren
- Einhaltung einer engen Partikelgrößenverteilung schwierig
- Notwendigkeit zur Nachkühlung bei der Verfestigung sowie zu einer Nachsiebung (Aussortierung von zu kleinen und zu großen Partikeln)
- Grosse Apparate bei der Vertropfung (hohe Falltürme).

Ausgehend hiervon war es somit Aufgabe der vorliegenden Erfindung, ein Verfahren zu entwickeln, mit dem für Polymere eine zuverlässigere Verfahrensführung bezüglich der Vertropfung bzw. der Vereinzelung möglich ist.

Diese Aufgabe wird mit den Merkmalen des Patentanspruches 1 gelöst, wobei die abhängigen Ansprüche vorteilhafte Weiterbildungen darstellen.

Erfindungsgemäß wird somit ein Verfahren zur Herstellung von Poly(arylether)sulfonpartikeln (Polymerpartikeln) aus einer Poly(arylether)sulfonlösung (Polymerlösung) angegeben, bei dem die Polymerlösung einem Vereinzelungsschritt zur Bildung von Tropfen aus der Polymerlösung unterzogen wird und die erhaltenen Tropfen in ein bewegtes Fällbad zur Ausfällung und Bildung der Polymerpartikel geführt werden.

Maßgeblich und erfindungswesentlich bei dem erfindungsgemäßen Verfahren sind folgende Aspekte:

- Es wird eine produktschonende Polymerlösung bei relativ tiefen Temperatur- und Druckniveaus zur Vertropfung verwendet, die Vertropfung bzw. Vereinzelung erfolgt also nicht aus produktstrapazierendem schmelzflüssigem Zustand des jeweiligen Polymers.

- Dabei konnte überraschenderweise festgestellt werden, dass bei Verwendung einer Polymerlösung anstelle einer Polymerschmelze eine deutlich verbesserte Standzeit der eingesetzten Vertropfungsanlagen gegeben ist, da die Polymerlösung deutlich weniger zur Ausbildung von Düsenperlen, Fäden oder Gespinsten neigt.
- Weiter konnte festgestellt werden, dass sich aufgrund der niedrigeren dynamischen Viskosität bei ausreichender Grenzflächenspannung überraschenderweise eine deutlich verbesserte Homogenität der Partikelgröße der entstehenden Tropfen einstellt, so dass äußerst homogene Partikel bzw. homogenes Granulatmaterial ohne Notwendigkeit einer Nachsiebung hergestellt werden kann.
- Außerdem wurde festgestellt, dass das Ausgasen und ggf. Zünden von Zersetzungsprodukten durch die schonendere Polymerbehandlung (üblicherweise tiefere Temperaturen und Drücke) reduziert wird.
- Es konnte festgestellt werden, dass das Sublimieren und Resublimieren von Oligomeren reduziert wird.
- Es konnte festgestellt werden, dass die Abrasion in den Apparaturen reduziert wird.
- Der Apparateaufwand bei gleicher Kapazität ist kleiner, weil keine hohen Falltürme sondern höchstens relativ kurze Fallstrecken benötigt werden, denn die Verfestigung der Partikel beim erfindungsgemäßen Verfahren beruht nicht auf Erstarrung durch Abkühlung, sondern auf einer Phasenumwandlung durch Ausfällung des Polymers in einer zweiten Flüssigkeit (Fällbad), in welcher das Polymer nicht löslich ist.
- Das erfindungsgemäße Verfahren bietet sich in jenen Fällen als elegante Lösung an, in denen das Polymer sowieso schon in Lösung vorliegt, insbesondere wenn es durch Lösungspolymerisation hergestellt wurde.
- In der gelösten Form lassen sich deutlich höhere Polymer-Molekulargewichte vertropfen als in der reinen Schmelzeform.

Besonders geeignete Poly(arylether)sulfone (abgekürzt und vereinfacht als Polysulfone bezeichnet) sind insbesondere PSU, PESU, PPSU und/oder Gemische hieraus. Beispielhafte Polysulfone, die erfindungsgemäß eingesetzt werden können, gehen z.B. aus der EP 0 297 363 A2 oder der DE 198 21 936 A1 hervor, deren Offenbarungsgehalt bezüglich der Verbindungen explizit mit aufgenommen wird.

Unter Polysulfonen sollen somit alle Poly(arylether)sulfone verstanden werden, insbesondere die Haupttypen PSU, PESU und PPSU. Im Gegensatz zu anderen Polykondensaten, wie Polyestern oder Polyamiden, werden die Polysulfone nicht in Schmelze polykondensiert, sondern in organischen Lösungsmitteln (z.B. NMP) aus entsprechenden speziellen Monomeren, wobei als Nebenprodukt Salz anfällt. Neben der speziellen Chemie besteht ein wesentlicher Verfahrensschritt darin, im Anschluss an die Polykondensation das gelöste Polysulfon in den reinen, festen Zustand überzuführen. Hierbei kommt als Fällungsmittel bevorzugt Wasser oder Alkohol zum Einsatz, mit dem man die Polysulfonlösung in Kontakt bringt. Damit dabei nicht grobe Klumpen oder unförmige Stränge entstehen, die man hinterher mühsam zerkleinern muss, ist es erfindungsgemäß von Vorteil, die Polysulfonlösung schon vor dem Kontakt oder spätestens beim Kontakt mit dem Fällungsmittel in einzelne Tropfen aufzuteilen, die dann als Partikel im Fällungsmittel koagulieren und ausfallen, so dass man direkt rieselfähige Partikel erhält, die nicht mehr zerkleinert werden müssen.

Bei der vorliegenden Erfindung ist das verwendete Wasser insbesondere für die Anwendung bei Polysulfonen bevorzugt heiß, d.h. es weist bevorzugt eine Temperatur von mindestens 80 °C auf. Es dient erstens als Fällungsmittel und darüber hinaus gleichzeitig als Extraktionsmittel zur Entfernung von Lösungsmittel und nicht abfiltriertem Salz aus den Polymerpartikeln, sowie als Transportmittel zu nachgeschalteten Prozessstufen. Es wurde beobachtet, dass die Ausfällung innerhalb von Sekunden oder sogar Sekundenbruchteilen stattfindet. Bei der genannten, bevorzugt hohen Wassertemperatur ist die Fahrweise stabil, und zweitens werden dabei poröse Partikel erhalten, was am Opakwerden der Partikel erkennbar ist. Diese bevorzugt offenporige Struktur ist vorteilhaft für die Extraktion.

In einer bevorzugten Ausführungsform des Verfahrens wird der durchschnittliche Durchmesser der beim Vereinzelungsschritt erzeugten Partikel (generell für alle Polymere) auf 0,5 bis 4 mm, bevorzugt 1 bis 3 mm, besonders bevorzugt 1,5 bis 2 mm, eingestellt. Dabei entspricht der zuvor genannte Durchmesser im Wesentlichen der Tropfengröße, d.h. es werden bevorzugt quasi runde oder leicht abgeflachte Tropfen bzw. Partikel erhalten.

Bevorzugte Vereinzelungsverfahren (generell für alle Polymere) sind dabei Versprühen oder Vertropfen. Unter Versprühen werden dabei aus dem Stand der Technik bekannte optimierte Verfahren verstanden, die mittels Sprühdüsen ausgeführt werden, die möglichst große Tropfen und nicht nur einen feinen Sprühnebel bilden, eventuell sogar Zweistoffdüsen, bei denen das Wasser schon unmittelbar am Austritt der Sprühdüse mit der Polysulfonlösung in Kontakt kommt. Üblicherweise werden Federkegeldüsen (federbetätigte Druckdüsen) zur Erzeugung grobdisperser Sprays mit großen Tropfen eingesetzt (und sind für die vorliegende Erfindung bevorzugt), während Hohlkegeldüsen zur Erzeugung feindisperser Sprays eingesetzt werden.

Andererseits kann beim Vertropfen das System der Vibrationsanregung eines aus einer vertikalen Düsenlochöffnung austretenden Flüssigkeitsstrahls verwendet werden, wo durch geeignete vertikale Frequenzen der Strahl zum Zerfall in einzelne Tropfen angeregt wird. Selbstverständlich können auf einer Düsenplatte auch mehrere Düsenlochöffnungen angebracht sein.

In einer vorteilhaften Ausführungsform bezüglich des Versprühungsverfahrens wird die Polymerlösung dabei unter Druck, bevorzugt bei 10 bis 50 bar Überdruck, über eine Einstoff- oder Zweistoffdüse, versprüht.

Bezüglich der Variante des Verfahrens, bei dem eine Vertropfung des Verfahrens erfolgt, ist es vorteilhaft, wenn die Polymerlösung über mindestens eine Düsenlochöffnung in mindestens einen Flüssigkeitsstrahl aufgeteilt und durch Einwirkung von vertikalen mechanischen Schwingungen, vorzugsweise mit einer Frequenz von 500 bis 1500 Hz, weiter bevorzugt von 800 bis 1200 Hz, in einzelne Tropfen aufgeteilt wird.

Sehr gute Ergebnisse werden erzielt, wenn die zahlengemittelte molare Masse $M_n$ der Polymere zwischen 5000 und 50000 g/mol, bevorzugt zwischen 8000 und 35000 g/mol, besonders bevorzugt zwischen 10000 und 30000 g/mol beträgt.

Erfindungsgemäß ist das Lösungsmittel der Polymerlösung ausgewählt aus der Gruppe bestehend aus N-Methylpyrrolidon, N-Ethylpyrrolidon, Dimethylformamid, Dimethylsulfoxid, 1,2-Dichlorbenzol, Sulfolan, Hexamethylphosphorsäuretriamid und/oder Mischungen hieraus.

Das erfindungsgemäße Verfahren zur Herstellung von Polymerpartikeln lässt sich mit Lösungen einsetzen, deren Gehalt an Polymeren über einen weiten Bereich variieren kann. Insbesondere eignen sich jedoch Konzentrationen der Lösung zwischen 10 und 60 Gew.-%, bevorzugt zwischen 15 und 40 Gew.-%.

Besonders gute Ergebnisse bezüglich der Tropfenform und der Homogenität der Partikel werden erzielt, wenn die Viskosität der Polymerlösung zwischen 0,1 und 3000 mPas, bevorzugt zwischen 0,3 und 500 mPas, liegt.

In einer weiteren bevorzugten Ausführungsform des erfindungsgemäßen Verfahrens beträgt die Temperatur der Polymerlösung beim Vereinzeln zwischen 80 und 270 °C, bevorzugt zwischen 110 und 240 °C, besonders bevorzugt zwischen 150 und 220 °C.

Für das Fällbad können Flüssigkeiten eingesetzt werden, die aus der Gruppe bestehend aus Wasser und/oder ein- oder zweiwertigen aliphatischen Alkoholen mit 1 bis 6 Kohlenstoffatomen ausgewählt sind.

Das Fällbad kann dabei auf verschiedene Arten bewegt werden, beispielsweise ist es möglich, das Fällbad in einem geschlossenen Behälter zu rühren, ebenso ist es jedoch möglich, die beim Vereinzelungsverfahren gebildeten Tropfen in ein strömendes Fällbad einzutragen. Durch die Bewegung wird erreicht, dass die vereinzelten Tropfen einander nicht mehr berühren bzw. nicht mehr vor der Verfestigung verkleben.

Bei etwas höheren Konzentrationen der Polymerlösungen, z.B. über ca. 40 Gew.-%, ist es möglich, dass die Viskosität der eingesetzten Lösung so hoch wird, dass ein Vertropfen oder Versprühen nicht mehr einwandfrei funktioniert. Für diesen höher viskosen Polymerlösungsbereich gibt es eine alternative erfindungsgemäße Variante, nämlich den Vereinzelungsschritt zur Bildung von Tropfen aus der Polymerlösung mittels einer Unterwassergranulierung durchzuführen. Das dort eingesetzte Prozess- und Transportwasser dient gleichzeitig als bewegtes Fällbad, und auch dort wird bevorzugt eine Wassertemperatur von mindestens 80 °C angewandt. Die dabei entstehenden Partikel können generell etwas weniger kugelig, sondern eher abgeflacht ausgebildet sein.

Gemäß dem erfindungsgemäßen Verfahren ist schließlich die Möglichkeit gegeben, die nach dem Eintrag im Fällbad erhaltenen Polymerpartikel nach der Extraktion und Separierung nachträglich unter Zusatz von Verstärkungsmitteln (z.B. runden oder flachen Glasfasern), Füllstoffen und Additiven, insbesondere Hitze- und Lichtstabilisatoren, zu compoundieren und die so erhaltene Formmasse zu granulieren.

**Patentansprüche**

1. Verfahren zur Herstellung von Poly(arylether)sulfonpartikeln aus einer Poly(arylether)sulfonlösung, bei dem die Poly(arylether)sulfonlösung einem Vereinzelungsschritt zur Bildung von Tropfen aus der Poly(arylether)sulfonlösung unterzogen wird und die erhaltenen Tropfen in ein bewegtes Fällbad zur Ausfällung und Bildung der Poly(arylether)sulfonpartikel geführt werden,
   **dadurch gekennzeichnet,**
   **dass** das Lösungsmittel der Poly(arylether)sulfonlösung aus der Gruppe bestehend aus N-Methylpyrrolidon, N-Ethylpyrrolidon, Dimethylformamid, Dimethylsulfoxid, 1,2-Dichlorbenzol, Sulfolan, Hexamethylphosphorsäuretriamid und/oder Mischungen hieraus ausgewählt ist.

2. Verfahren nach Anspruch 1, **dadurch gekennzeichnet, dass** die Poly(arylether)sulfonlösung zur Vereinzelung in Tropfen versprüht oder vertropft wird und über eine Fallstrecke in das Fällbad eingetragen wird.

3. Verfahren nach Anspruch 2, **dadurch gekennzeichnet, dass** die Poly(arylether)sulfonlösung unter Druck, bevorzugt bei 10 bis 50 bar Überdruck, über eine Einstoff- oder Zweistoffdüse, versprüht wird.

4. Verfahren nach Anspruch 2, **dadurch gekennzeichnet, dass** die Poly(arylether)sulfonlösung über mindestens eine Düsenlochöffnung in mindestens einen Flüssigkeitsstrahl aufgeteilt und durch Einwirkung von vertikalen mechanischen Schwingungen, vorzugsweise mit einer Frequenz von 500 bis 1500 Hz, bevorzugt von 800 bis 1200 Hz, in einzelne Tropfen aufgeteilt wird.

5. Verfahren nach Anspruch 1, **dadurch gekennzeichnet, dass** die Poly(arylether)sulfonlösung mittels einer Unterwassergranulierung vereinzelt und ausgefällt wird.

6. Verfahren nach einem der vorhergehenden Ansprüche, **dadurch gekennzeichnet, dass** die Poly(arylether)sulfonpartikel einen Durchmesser von 0,5 bis 4 mm, bevorzugt 1 bis 3 mm, besonders bevorzugt 1,5 bis 2 mm, aufweisen, der im Wesentlichen der Tropfengröße entspricht.

7. Verfahren nach einem der vorhergehenden Ansprüche, **dadurch gekennzeichnet, dass** die Poly(arylether)sulfone ausgewählt sind aus der Gruppe bestehend aus PSU, PESU, PPSU und/oder Gemischen hieraus.

8. Verfahren nach einem der vorhergehenden Ansprüche, **dadurch gekennzeichnet, dass** die zahlengemittelte molare Masse $M_n$ der Poly(arylether)sulfone zwischen 5000 und 50000 g/mol, bevorzugt zwischen 8000 und 35000 g/mol, besonders bevorzugt zwischen 10000 und 30000 g/mol beträgt.

9. Verfahren nach einem der vorhergehenden Ansprüche, **dadurch gekennzeichnet, dass** die Konzentration der Lösung zwischen 10 und 60 Gew.-%, bevorzugt zwischen 15 und 40 Gew.-%, beträgt.

10. Verfahren nach einem der vorhergehenden Ansprüche, **dadurch gekennzeichnet, dass** die Viskosität der Poly(arylether)sulfonlösung zwischen 0,1 und 3000 mPas, bevorzugt zwischen 0,3 und 500 mPas, liegt.

11. Verfahren nach einem der vorhergehenden Ansprüche, **dadurch gekennzeichnet, dass** die Temperatur der Poly(arylether)sulfonlösung beim Vereinzeln zwischen 80 und 270 °C, bevorzugt zwischen 110 und 240 °C, besonders bevorzugt zwischen 150 und 220 °C beträgt.

12. Verfahren nach einem der vorhergehenden Ansprüche, **dadurch gekennzeichnet, dass** das Fällbad Flüssigkeiten ausgewählt aus der Gruppe bestehend aus Wasser und/oder ein- oder zweiwertigen aliphatischen Alkoholen mit 1 bis 6 Kohlenstoffatomen enthält oder hieraus besteht.

13. Verfahren nach einem der vorhergehenden Ansprüche, **dadurch gekennzeichnet, dass** die Poly(arylether)sulfonpartikel nach Extraktion und Separierung nachträglich unter Zusatz von Verstärkungsmitteln, Füllstoffen und Additiven, insbesondere Hitze- und Lichtstabilisatoren, compoundiert werden und die so erhaltene Formmasse granuliert wird.

**Claims**

1. A method for manufacturing poly(aryl ether) sulfone particles from a poly(aryl ether) sulfone solution, in which the poly(aryl ether) sulfone solution is subjected to a separation step to form drops of the poly(aryl ether) sulfone solution and the drops obtained are fed into an agitated precipitation bath to precipitate and form the poly(aryl ether) sulfone particles,
**characterised in that**
the solvent of the poly(aryl ether) sulfone solution is selected from the group consisting of N-methylpyrrolidone, N-ethylpyrrolidone, dimethylformamide, dimethyl sulfoxide, 1,2-dichlorobenzene, sulfolane, hexamethylphosphoric triamide and/or mixtures thereof.

2. The method according to claim 1, **characterised in that** the poly(aryl ether) sulfone solution is sprayed or dropped for the purpose of separating it into drops and introduced into the precipitation bath through a falling zone.

3. The method according to claim 2, **characterised in that** the poly(aryl ether) sulfone solution is sprayed under pressure, preferably at 10 to 50 bar excess pressure, through a one-component or two-component nozzle.

4. The method according to claim 2, **characterised in that** the poly(aryl ether) sulfone solution is divided by means of at least one nozzle aperture into at least one jet of liquid and divided into individual drops by the action of vertical mechanical vibrations, preferably at a frequency of 500 to 1500 Hz, for preference 800 to 1200 Hz.

5. The method according to claim 1, **characterised in that** the poly(aryl ether) sulfone solution is separated and precipitated by means of underwater granulation.

6. The method according to one of the preceding claims, **characterised in that** the poly(aryl ether) sulfone particles have a diameter of 0.5 to 4 mm, preferably 1 to 3 mm, particularly preferably 1.5 to 2 mm, which substantially corresponds to the drop size.

7. The method according to one of the preceding claims, **characterised in that** the poly(aryl ether) sulfones are selected from the group consisting of PSU, PESU, PPSU and/or mixtures thereof.

8. The method according to one of the preceding claims, **characterised in that** the number average molecular weight $M_n$ of the poly(aryl ether) sulfones is between 5000 and 50000 g/mol, preferably between 8000 and 35000 g/mol and particularly preferably between 10000 and 30000 g/mol.

9. The method according to one of the preceding claims, **characterised in that** the concentration of the solution is between 10 and 60 wt.%, preferably between 15 and 40 wt.%.

10. The method according to one of the preceding claims, **characterised in that** the viscosity of the poly(aryl ether) sulfone solution is between 0.1 and 3000 mPas, preferably between 0.3 and 500 mPas.

11. The method according to one of the preceding claims, **characterised in that** the temperature of the poly(aryl ether) sulfone solution during separation is between 80 and 270°C, preferably between 110 and 240°C, particularly preferably between 150 and 220°C.

12. The method according to one of the preceding claims, **characterised in that** the precipitation bath contains or consists of liquids selected from the group consisting of water and/or monohydric or dihydric aliphatic alcohols with 1 to 6 carbon atoms.

13. The method according to one of the preceding claims, **characterised in that** the poly(aryl ether) sulfone particles, after extraction and separation, are subsequently compounded with the addition of reinforcing materials, fillers and additives, in particular heat and light stabilisers, and the moulding composition thus obtained is granulated.

**Revendications**

1. Procédé de fabrication de particules de poly(aryléthersulfone) à partir d'une solution de poly(aryléthersulfone), dans lequel la solution de poly(aryléthersulfone) est soumise à une étape de séparation pour générer des gouttes à partir de la solution de poly(aryléthersulfone) et les gouttes obtenues sont conduites dans un bain de précipitation que l'on agite afin de générer une précipitation et une formation de particules de poly(aryléthersulfone), **caractérisé en ce que** le solvant de la solution de poly(aryléthersulfone) est choisi dans le groupe constitué de la N-méthylpyrrolidone, de la N-éthylpyrrolidone, du diméthylformamide, du diméthylsulfoxyde, du 1,2-dichlorobenzène, du sulfolane, du triamide de l'acide hexaméthylphosphorique et/ou de leurs mélanges.

2. Procédé selon la revendication 1, **caractérisé en ce que** la solution de poly(aryléthersulfone) est, pour la séparation, pulvérisée ou dispersée en gouttes et **en ce qu'**elle est introduite dans le bain de précipitation sur un trajet de chute.

3. Procédé selon la revendication 2, **caractérisé en ce que** la solution de poly(aryléthersulfone) est vaporisée sous pression, de préférence sous une surpression de 10 à 50 bars, au moyen d'une buse pour un composant ou d'une buse bi- composant.

4. Procédé selon la revendication 2, **caractérisé en ce que** la solution de poly(aryléthersulfone) est répartie, par au moins un orifice de buse, en au moins un jet de liquide, et en gouttes individuelles sous l'influence d'oscillations mécaniques verticales, de préférence à une fréquence de 500 à 1500 Hz, de préférence de 800 à 1200 Hz.

5. Procédé selon la revendication 1, **caractérisé en ce que** la solution de poly(aryléthersulfone) est séparée et précipitée au moyen d'une granulation sous eau.

6. Procédé selon l'une quelconque des revendications précédentes, **caractérisé en ce que** les particules de poly(aryléthersulfone) présentent un diamètre de 0,5 à 4 mm, de préférence de 1 à 3 mm, et de toute préférence de 1,5 à 2 mm, ce dernier diamètre correspondant sensiblement à la taille des gouttes.

7. Procédé selon l'une quelconque des revendications précédentes, **caractérisé en ce que** les poly(aryléthersulfones) sont choisis dans le groupe constitué de la PSU, de la PESU, de la PPSU et/ou de leurs mélanges.

8. Procédé selon l'une quelconque des revendications précédentes, **caractérisé en ce que** la masse molaire moyenne en nombre $M_n$ des poly(aryléthersulfones) est comprise entre 5000 et 50 000 g/mol, de préférence entre 8000 et 35 000 g/mol, de toute préférence entre 10 000 et 30 000 g/mol.

9. Procédé selon l'une quelconque des revendications précédentes, **caractérisé en ce que** la concentration de la solution se situe entre 10 et 60 % en poids, de préférence entre 15 et 40 % en poids.

10. Procédé selon l'une quelconque des revendications précédentes, **caractérisé en ce que** la viscosité de la solution de poly(aryléthersulfone) se situe entre 0,1 et 3000 mPas, de préférence entre 0,3 et 500 mPas.

11. Procédé selon l'une quelconque des revendications précédentes, **caractérisé en ce que** la température de la solution de poly(aryléthersulfone) est comprise, lors de la séparation, entre 80 et 270 °C, de préférence entre 110 et 240 °C, et de toute préférence entre 150 et 220 °C.

12. Procédé selon l'une quelconque des revendications précédentes, **caractérisé en ce que** le bain de précipitation contient ou est constitué de liquides choisis dans le groupe constitué d'eau et/ou d'alcools aliphatiques monovalents ou divalents ayant 1 à 6 atomes de carbone.

13. Procédé selon l'une quelconque des revendications précédentes, **caractérisé en ce que** l'on obtient ultérieurement, après extraction et séparation, des mélanges à partir des particules de poly(aryléthersulfone) par ajout d'agents de renforcement, d'agents de charge et d'additifs, en particulier des stabilisateurs de chaleur et de lumière, et **en ce que** l'on granule la masse de moulage obtenue de la sorte.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0735940 B1
- DE 102004059069 A1
- DE 10204954 A1
- US 20030020213 A1
- US 3919363 A
- EP 0297363 A2
- DE 19821936 A1

### In der Beschreibung aufgeführte Nicht-Patentliteratur

- Statique Expérimentale et Théoretique des Liquides Soumis aux Seules Forces Moléculaires. **J. Plateau.** Theory of Sound. Dover Publications, 1945, vol. 2
- **Lord Rayleigh J.W.S.** On the instability of jets. *Proc. Math. Soc. Lond.,* 1978, vol. 10, 4-13
- **A. Lefebvre.** Atomization and sprays. Hemisphere Publishing Corporation, 1989
- **C. Weber.** Disintegration of liquid jets. *Z. Angew. Math. Mech.,* 1931, vol. 11, 136-159